(19) **Europäisches Patentamt**

**European Patent Office**

**Office européen des brevets**

(11) **EP 1 416 401 A2**

(12) **EUROPÄISCHE PATENTANMELDUNG**

(43) Veröffentlichungstag:
06.05.2004   Patentblatt 2004/19

(51) Int Cl.[7]: **G06F 17/30**

(21) Anmeldenummer: 03023665.7

(22) Anmeldetag: **17.10.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **30.10.2002   DE 10250642**

(71) Anmelder: **SIEMENS AKTIENGESELLSCHAFT**
**80333 München (DE)**

(72) Erfinder:
• **Bürgel, Marcus**
  **90562 Heroldsberg (DE)**
• **Frank, Edgar**
  **90461 Nürnberg (DE)**
• **Heller, Rainer**
  **90542 Eckental (DE)**
• **Kulzer, Heinrich**
  **90475 Nürnberg (DE)**
• **Wissmann, Dieter, Dr.**
  **91361 Pinzberg (DE)**

(54) **Erweiterung von Datensätzen**

(57)     Die Erfindung betrifft ein System sowie ein Verfahren zur Strukturierung, Speicherung und Verarbeitung von Daten. Zur Vereinfachung der Erweiterung von Datensätzen um zusätzliche Daten wird ein generisches Objektmodell (10) vorgeschlagen, wobei das Objektmodell (10) mindestens ein erstes Element aufweist, welches einem Typ Objekt (100) entspricht, wobei der Typ Objekt (100) mindestens eine Verknüpfung (6) mit einem Containerelement aufweist, wobei das Containerelement global definiert ist und für die Aufnahme von dritten Elementen vom Typ Feature (20) vorgesehen ist, wobei der Typ Feature (20) einen global eindeutigen Namen (21) und die Möglichkeit der Verknüpfung mit weiteren Elementen vom Typ Objekt (100), mit weiteren Elementen vom Typ Feature (20) und mit Daten (30, 40, 50) aufweist.

FIG 1

EP 1 416 401 A2

**Beschreibung**

Die Erfindung betrifft ein System sowie ein Verfahren zur Strukturierung, Speicherung und Verarbeitung von Daten.

Beim Entwurf von Softwaresystemen müssen normalerweise auch Datenformate festgelegt werden. In vielen Fällen müssen die Daten, die von einer Applikation erzeugt werden, auch von anderen Applikationen gelesen werden. Manchmal besteht darüber hinaus die Notwendigkeit, dass die bestehenden Daten, die von einer Applikation erzeugt wurden, um Daten einer oder mehrerer anderer Applikationen angereichert werden müssen, d. h. es müssen Daten der neuen Applikationen zu den bestehenden Applikationen hinzugefügt werden. Dieses Szenario tritt zum Beispiel bei der Verwendung von Toolketten zur Projektierung von Automatisierungslösungen auf.

Der Erfindung liegt die Aufgabe zugrunde, die Erweiterung von Datensätzen um zusätzliche Daten zu vereinfachen.

Diese Aufgabe wird durch ein System zur Strukturierung, Speicherung und Verarbeitung von Daten mit einem generischen Objektmodell gelöst, wobei das Objektmodell mindestens ein erstes Element aufweist, welches einem Typ Objekt entspricht, wobei der Typ Objekt mindestens eine Verknüpfung mit einem Containerelement aufweist, wobei das Containerelement global definiert ist und für die Aufnahme von dritten Elementen vom Typ Feature vorgesehen ist, wobei der Typ Feature folgende Merkmale aufweist:

- einen global eindeutigen Namen und
- die Möglichkeit der Verknüpfung mit weiteren Elementen vom Typ Objekt, mit weiteren Elementen vom Typ Feature und mit Daten.

Diese Aufgabe wird durch ein Verfahren zur Strukturierung, Speicherung und Verarbeitung von Daten mit einem generischen Objektmodell gelöst, wobei das Objektmodell mindestens ein erstes Element aufweist, welches einem Typ Objekt entspricht, wobei der Typ Objekt mindestens mit einem Containerelement verknüpft ist, wobei das Containerelement global definiert ist und dritte Elemente vom Typ Feature aufnehmen kann, wobei der Typ Feature folgende Merkmale aufweist:

- einen global eindeutigen Namen und
- die Möglichkeit der Verknüpfung mit weiteren Elementen vom Typ Objekt, mit weiteren Elementen vom Typ Feature und mit Daten.

Der Erfindung liegt die Erkenntnis zugrunde, dass bei der Erstellung eines Datenformats normalerweise noch nicht bekannt ist, welche Applikationen und Applikationsversionen diese Daten verwenden und wie und von welchen Applikationen die Daten möglicherweise angereichert werden. Darüber hinaus müssen Instanzen der erweiterten Daten kompatibel mit den ursprünglichen Datenformaten bleiben, damit bestehende Applikationen auch mit den angereicherten Daten arbeiten können. Es wird ein System zur Gestaltung von erweiterbaren Datenformaten vorgeschlagen, bei denen die erweiterten Datenformate kompatibel mit den ursprünglichen Datenformaten bleiben. D. h. alle Applikationen, die mit dem ursprünglichen Datenformat arbeiten, können auch mit den angereicherten Daten arbeiten. Das beschriebene System hat außerdem den Vorteil, dass die Erweiterungen eng mit den bestehenden Daten verbunden sind, dass also zum Beispiel eine Applikation, die nur das ursprüngliche Datenformat kennt, die Erweiterungen beim Kopieren berücksichtigen kann, ohne das eigentliche Format zu kennen. Wenn ein Objekttyp um Daten eines anderen Produkts erweitert werden soll, so wird ein neues Feature definiert, das dann zu dem bestehenden Objekt dazugefügt wird. Die Definition des ursprünglichen Objekttyps soll dabei bestehen bleiben, damit die Tools, die mit dem bisherigen Objekttyp arbeiten, nicht beeinträchtigt werden. Dies wird dadurch erreicht, dass ein spezifischer Container, z. B. genannt ExtraFeatures, bei der Grunddefinition des Typs Objekt vorhanden ist, der es erlaubt, Features beliebigen Typs aufzunehmen. Durch die Erweiterung über Features und Einfügen eines neuen Features in den spezifischen Container muss auf bestehende Applikationen keine Rücksicht genommen werden. Die zusätzlich hinzugefügten Daten werden jeweils in eigene Features abgelegt. Die Features werden über Namen identifiziert, so dass jede Applikation den Inhalt der Features lesen kann, die für sie von Interesse sind. Features mit unbekanntem Namen können von den Applikationen einfach ignoriert werden. Durch die Verwendung des erfindungsgemäßen Systems kann erreicht werden, dass alle damit modellierten Datenbestände gemeinsame erweiterbare Grundstrukturen beinhalten. Durch die Erweiterbarkeit können beliebige, heute noch nicht bekannte Abbildungsanforderungen an die Daten erfüllt werden, die dann auch wieder in dieses grundsätzliche Verständnis der Einheitlichkeit einfließen. Applikationen, die ihre Erweiterungen in dem beschriebenen Format vornehmen, genießen dann automatisch auch die Kompatibilität des Datenformats mit allen vorherigen Formaten.

Gemäß einer vorteilhaften Ausgestaltung der Erfindung wird das Objektmodell mit einer erweiterbaren Auszeichnungssprache beschrieben. Das Objektmodell wird insbesondere in einem XML-Schema beschrieben (XML = Extensible Markup Language). Durch Verwendung der Sprache XML ist gewährleistet, dass alle Features, die eine Applikation nicht kennt, einfach überlesen werden können. Die hierarchische Struktur von XML stellt darüber hinaus sicher, dass jedes Objekt zusammen mit allen seinen Features eine Einheit bildet, die zusammen hantiert (und z. B. auch kopiert, gelöscht oder verschoben) werden kann.

Es wird vorgeschlagen, das erfindungsgemäße System bzw. Verfahren zum Engineering eines Automatisierungssystems zu verwenden.

Nachfolgend wird die Erfindung anhand der in den Figuren dargestellten Ausführungsbeispiele näher beschrieben und erläutert.

Es zeigen:

FIG 1    die Grundidee des Objektmodells in Form eines UML-Diagramms und

FIG 2    ein System zum Engineering einer Automatisierungslösung.

Falls bisher schon erweiterbare Datenstrukturen verwendet wurden, geht dabei oft der Zusammenhang zwischen den ursprünglichen Daten ("Grunddaten") und den "Erweiterungsdaten" verloren. In Relationalen Datenbanken ist es zum Beispiel gängige Praxis, mit Fremdschlüssel-Beziehungen zu arbeiten. Die Grunddaten und die Erweiterungsdaten werden dabei in unterschiedlichen Tabellen abgelegt. Hier weiß z. B. eine Kopieroperation, die eigentlich einen gesamten zusammengehörigen Datenbestand duplizieren soll, nichts von den Erweiterungsdaten, und kopiert daher nur die Grunddaten. Die Applikationen verwenden beim Einlesen der Daten Filter, um nur die Daten zu lesen, die für sie von Interesse sind. Die Realisierung der Filter kann im Falle von relationalen Datenbanken zum Beispiel über Views geschehen. In manchen Fällen, zum Beispiel bei der Verwendung von binären Datenformaten, kann das beschriebene Problem nur durch eine explizite Konvertierung von dem Erweiterungsformat in das ursprüngliche Format gelöst werden, wobei bei diesem Vorgehen jedoch auf einer Kopie der Daten gearbeitet wird und somit der Zusammenhang zwischen den Erweiterungsdaten und den Grunddaten verloren geht.

Das oben beschriebene Konzept wird in einem Ausführungsbeispiel auf die folgende Art und Weise in einem XML-Schema umgesetzt: Der Typ ObjectT ist der Basistyp für alle Objekte, die durch Features erweiterbar sind. Neben verschiedenen anderen Attributen und Kindelementen besitzt der Typ ObjectT auch das Kindelement ExtraFeatures. Über die globale Elementdeklaration des Elements Feature und die Verwendung von Ableitung in Verbindung mit "Substitution Groups" kann dieser Container beliebige Features aufnehmen.

```
<?xml version="1.0" encoding="utf-8"?>

<xsd:schema

    targetNamespace="http://www.siemens.com/Industry/2002/03/01/Automation/Primitives"

    xmlns="http://www.siemens.com/Industry/2002/03/01/Automation/Primitives"

    xmlns:xsd="http://www.w3.org/2001/XMLSchema"

    elementFormDefault="qualified"

    attributeFormDefault="unqualified">


    <xsd:complexType name="ObjectT">

        <xsd:annotation>

            <xsd:documentation>Base type for all DIA-X objects</xsd:documentation>

        </xsd:annotation>

        <xsd:sequence>

            <xsd:element name="App_Id" type="ApplicationSpecificIdT" minOccurs="0"
maxOccurs="unbounded"/>

            <xsd:element name="ExtraFeatures" type="ExtraFeaturesT" minOccurs="0"/>

        </xsd:sequence>

        <xsd:attribute name="ID" type="IdT" use="required"/>

        <xsd:attribute name="Name" type="xsd:string" use="optional"/>

        <xsd:attribute name="Version" type="VersionT" use="optional"/>

        <xsd:attribute name="OType" type="xsd:string" use="optional">

            <xsd:annotation>

                <xsd:documentation>OType is an application/domain defined type, NOT an xsd
datatype.</xsd:documentation>

            </xsd:annotation>

        </xsd:attribute>

        <xsd:attribute name="Deleted" type="xsd:boolean" use="optional"
default="false"/>

    </xsd:complexType>
```

```
<xsd:complexType name="ExtraFeaturesT">

    <xsd:sequence>

        <xsd:element ref="Feature" minOccurs="0" maxOccurs="unbounded"/>

    </xsd:sequence>

</xsd:complexType>


<xsd:complexType name="FeatureT">

    <xsd:annotation>

        <xsd:documentation>Base type for all DIA-X features</xsd:documentation>

    </xsd:annotation>

    <xsd:attribute name="Name" type="xsd:string" use="optional"/>

</xsd:complexType>


<xsd:element name="Object" type="ObjectT"/>

<xsd:element name="Feature" type="FeatureT"/>

</xsd:schema>
```

Die eigentlichen Objekte der Applikationen werden vom Basistyp ObjectT abgeleitet. Im folgenden Beispiel-Schema-Ausschnitt wird der Typ DeviceT definiert. In der Typdefinition sind schon drei Features, StandardFeature, StructuralFeature und NetworkFeature, enthalten.

```
<?xml version="1.0" encoding="utf-8"?>

<xsd:schema

    targetNamespace="http://www.siemens.com/Industry/2002/03/01/Automation/Base"

    xmlns="http://www.siemens.com/Industry/2002/03/01/Automation/Base"

    xmlns:prim="http://www.siemens.com/Industry/2002/03/01/Automation/Primitives"

    xmlns:xsd="http://www.w3.org/2001/XMLSchema"

    elementFormDefault="qualified" attributeFormDefault="unqualified">


    <xsd:import

        namespace="http://www.siemens.com/Industry/2002/03/01/Automation/Primitives"/>


    <xsd:complexType name="DeviceT">

        <xsd:complexContent>

            <xsd:extension base="prim:ObjectT">

                <xsd:sequence>
```

```
                    <xsd:element name="StandardFeature" type="DeviceStandardFeatureT"
minOccurs="0"/>
                        <xsd:element name="StructuralFeature" type="DeviceStructuralFeatureT"
minOccurs="0"/>
                        <xsd:element name="NetworkFeature" type="DeviceNetworkFeatureT"
minOccurs="0"/>
                    </xsd:sequence>
                </xsd:extension>
            </xsd:complexContent>
        </xsd:complexType>


        <xsd:element name="Device" type="DeviceT" substitutionGroup="prim:Object"/>


        <xsd:complexType name="DeviceStandardFeatureT">
            <xsd:complexContent>
                <xsd:extension base="prim:FeatureT">
                    <xsd:sequence>
                        <xsd:element name="MLFB" type="MLFBParameterT" minOccurs="0"/>
                    </xsd:sequence>
                </xsd:extension>
            </xsd:complexContent>
        </xsd:complexType>
        <xsd:complexType name="MLFBParameterT">
            <xsd:complexContent>
                <xsd:extension base="prim:ParameterT">
                    <xsd:attribute name="Value" type="MLFBT" use="required"/>
                </xsd:extension>
            </xsd:complexContent>
        </xsd:complexType>
        <xsd:complexType name="DeviceStructuralFeatureT">
            <xsd:complexContent>
                <xsd:extension base="prim:FeatureT">
                    <xsd:sequence>
                        <xsd:element name="Location" type="prim:StringParameterT"
minOccurs="0"/>
                        <xsd:element ref="Device" minOccurs="0" maxOccurs="unbounded"/>
                    </xsd:sequence>
```

```
            </xsd:extension>

          </xsd:complexContent>

        </xsd:complexType>

      <xsd:complexType name="DeviceNetworkFeatureT">

        <xsd:complexContent>

          <xsd:extension base="prim:FeatureT">

            <xsd:sequence>

              <xsd:element name="Network" type="prim:ReferenceT" minOccurs="0"
maxOccurs="unbounded"/>

            </xsd:sequence>

          </xsd:extension>

        </xsd:complexContent>

      </xsd:complexType>

  </xsd:schema>
```

Ein Instanzbeispiel mit nur den im Schema definierten Features könnte dann zum Beispiel so aussehen:

```
    <?xml version="1.0" encoding="UTF-8"?>

    <base:Device

      xmlns:prim="http://www.siemens.com/Industry/2002/03/01/Automation/Primitives"

      xmlns:base="http://www.siemens.com/Industry/2002/03/01/Automation/Base"

      xmlns:xsi="http://www.w3.org/2001/XMLSchema-instance">


      ID="{7034154A-E7CF-406E-913A-69DE1D5E535E}" Name="DP-Master">


      <base:StandardFeature>

        <base:MLFB Value="_S7H_DP_ETCR_INTEGR_ISLAVE_CT"/>

      </base:StandardFeature>

      <base:StructuralFeature>

        <base:Location Value="1"/>

      </base:StructuralFeature>

      <base:NetworkFeature>

        <base:Network Target="{26DB99AD-2AFF-44AA-8A9D-F50FE4F452FD}"/>

      </base:NetworkFeature>

    </base:Device>
```

Wenn nun eine Applikation weitere Daten zu diesem Device-Objekt ablegen möchte, so muss ein zusätzliches Feature in einem XML-Schema definiert werden:

```
<?xml version="1.0" encoding="utf-8"?>
<xsd:schema
    targetNamespace="http://www.siemens.com/Industry/2002/03/01/Automation/HMI"
    xmlns="http://www.siemens.com/Industry/2002/03/01/Automation/HMI"
    xmlns:prim="http://www.siemens.com/Industry/2002/03/01/Automation/Primitives"
    xmlns:xsd="http://www.w3.org/2001/XMLSchema"
    elementFormDefault="qualified" attributeFormDefault="unqualified">

    <xsd:complexType name="DeviceHMIFeatureT">
        <xsd:complexContent>
            <xsd:extension base="prim:FeatureT">
                <xsd:sequence>
                    <xsd:element ref="Tag" minOccurs="0" maxOccurs="unbounded"/>
                    <xsd:element ref="Screen" minOccurs="0" maxOccurs="unbounded"/>
                </xsd:sequence>
            </xsd:extension>
        </xsd:complexContent>
    </xsd:complexType>

    <xsd:element name="DeviceHMIFeature" type="DeviceHMIFeatureT"
substitutionGroup="prim:Feature"/>

    <!-- Definitionen von Tag und Screen ausgelassen -->

</xsd:schema>
```

Eine XML-Instanz, in der das zusätzliche Feature verwendet wird, sieht dann beispielsweise folgendermaßen aus:

```
<?xml version="1.0" encoding="UTF-8"?>

<base:Device

    xmlns:prim="http://www.siemens.com/Industry/2002/03/01/Automation/Primitives"

    xmlns:base="http://www.siemens.com/Industry/2002/03/01/Automation/Base"

    xmlns:hmi="http://www.siemens.com/Industry/2002/03/01/Automation/HMI"

    xmlns:xsi="http://www.w3.org/2001/XMLSchema-instance">


    ID="{7034154A-E7CF-406E-913A-69DE1D5E535E}" Name="DP-Master">


    <prim:ExtraFeatures>

      <hmi:DeviceHMIFeature >

        <hmi:Tag />

        <hmi:Tag />

        <hmi:Tag />

        <hmi:Tag />

        <hmi:Screen />

      </hmi:DeviceHMIFeature >

    </prim:ExtraFeatures>

    <base:StandardFeature>

      <base:MLFB Value="_S7H_DP_ETCR_INTEGR_ISLAVE_CT"/>

    </base:StandardFeature>

    <base:StructuralFeature>

      <base:Location Value="1"/>

    </base:StructuralFeature>

    <base:NetworkFeature>

      <base:Network Target="{26DB99AD-2AFF-44AA-8A9D-F50FE4F452FD}"/>

    </base:NetworkFeature>

  </base:Device>
```

Durch die Erweiterung über ExtraFeatures konnte das Schema des Typs DeviceT beibehalten werden. D. h., alle Applikationen, die das erste Instanzdokument lesen und verstehen können, können auch die ursprünglichen Daten aus dem zweiten Instanzdokument lesen und verstehen. Die Erweiterungsdaten im Container ExtraFeatures können als "Black Box" behandelt werden und sind wegen der Verwendung der hierarchischen XML-Struktur immer mit dem Objekt verbunden.

XML-Schemas stellen einen Mechanismus namens "Substitution Groups" zur Verfügung, der einen einfachen Austausch von Elementen durch andere Elemente ermöglicht. Dazu werden Elemente einer Gruppe von Elementen zugeordnet - der Substitution Group, die die gemeinsame Eigenschaft haben, gegen ein sogenanntes "Head Element" austauschbar zu sein. Dieses Head Element muss global definiert sein. Das oben genannte Containerelement kann z. B. ein solches Head Element sein. Elemente einer Substitution Group müssen den gleichen oder einen davon abgeleiteten Typ wie das Head Element haben

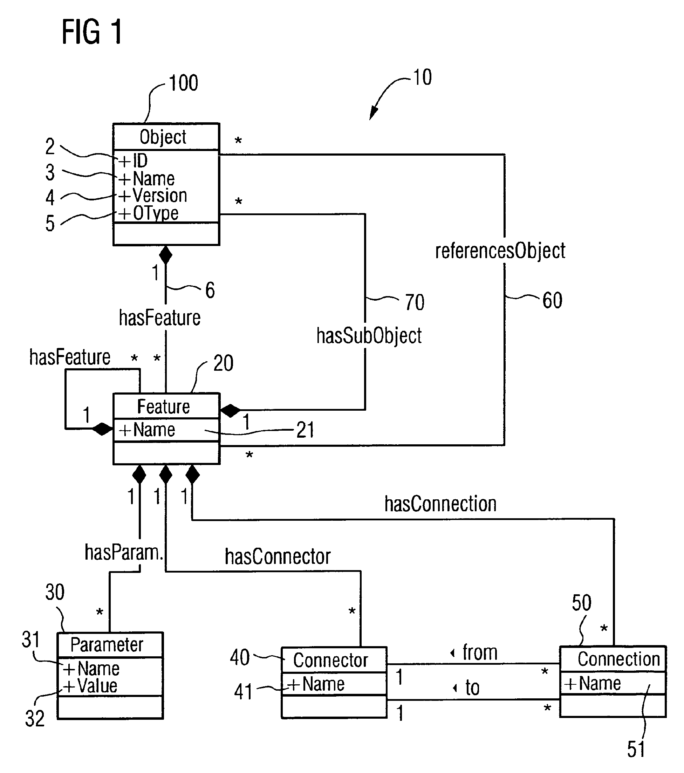

In FIG 1 wird die Grundidee des Objektmodells 10 in Form eines UML-Diagramm dargestellt. UML (= Unified Modeling Language) ist eine durch die Object Management Group (OMG) standardisierte graphische Sprache zur Beschreibung objektorientierter Modelle. Im Mittelpunkt des Objektmodells 10 steht der Typ Objekt 100. Im Ausführungsbeispiel besitzt jedes Objekt 100 die Attribute ID 2, Name 3, Version 4 und OType 5. Die ID 2 ist hierbei eine eindeutige Bezeichnung, die sich nie ändert. Die ID 2 kann zum Beispiel eine GUID (= Globally Unique Identifier) sein. Sie dient zur eindeutigen Identifizierung des Objektes 100, d. h. über die ID 2 kann das Objekt 100 absolut, also ohne Bezug zu seiner Umwelt bzw. seinem Kontext, referenziert werden. Jedem Objekt 100 wird ein Name 3 zugeordnet. Über den Namen 3 kann das Objekt 100 ebenfalls referenziert werden.

Wie im Diagramm von FIG 1 zu sehen, bilden Features 20 die Substruktur der Objekte 100. Sie gruppieren die Parameter 30, Referenzen 60, Sub-Objekte 100, Connectoren 40 und Connections 50 des Objekts 100 und können auch selbst wieder über Features 20 strukturiert werden. Die Verknüpfung zum SubObjekt 100 ist im UML-Diagramm von FIG 1 mit dem Bezugszeichen 70 gekennzeichnet, das SubObjekt 100 erhält jedoch das gleiche Bezugszeichen wie das oben erwähnte Objekt 100, da es die gleiche Struktur aufweist. Grundlage der Gruppierung sind zum einen die logische Zusammengehörigkeit der Bestandteile des Objekts 100 zu einer bestimmten "Sicht" (z.B. HMI, Hardware, Software) auf das Objekt 100. Mit dieser Unterteilung können die jeweiligen Tools leichter jene Objekt-Daten lesen, die sie interessieren.

Zum anderen bilden Features 20 die Einheit der Erweiterung von Objekten 100 um produktspezifische Bestandteile. Features 20 können somit zur Erweiterung von bestehenden Objekttypen um spezifische weitere Objektinformationen verwendet werden, die zum Objekt 100 hinzugefügt werden sollen und evtl. nur für bestimmte Applikationen von Interesse sind. Dieser Weg wird im Gegensatz zur Erweiterung durch Ableitung gewählt, um Produkte, die mit bestehenden Typen arbeiten, nicht inkompatibel werden zu lassen. Wenn ein Objekttyp um Daten eines anderen Produkts erweitert werden soll, so wird ein neues Feature 20 definiert, das dann zu dem bestehenden Objekt 100 dazugefügt wird. Die Definition des ursprünglichen Objekttyps bleibt dabei bestehen, damit die Tools, die mit dem bisherigen Objekttyp arbeiten, nicht beeinträchtigt werden. Durch die Erweiterung über neue Features 20 muss auf bestehende Applikationen keine Rücksicht genommen werden. Features 20, die einen im Bezug auf das jeweilige Objekt 100 eindeutigen Namen 21 tragen, haben jeweils 1 zu n - Beziehungen zu Parametern 30, Connectoren 40 und Connections 50. Des Weiteren können die Objekte 100 über Features 20 auch Sub-Objekte 100 aggregieren und Referenzen 60/Relationen zu anderen Objekten 100 enthalten. Über die Aggregation entsteht ein Baum aus Objekten 100. Durch die Referenzen 60 können Querbezüge zwischen den Elementen dieses Baums dargestellt werden. Die Parameter 30, Connectoren 40 und Connections 50 stellen bildlich gesprochen das Laub des Baumes, also im Bezug auf die zu modellierenden Datenbestände die eigentlichen Daten dar. Features 20 können selbst wieder Features 20 enthalten. Objekte, Features und Referenzen stellen die Struktur-Information eines Datenbestandes dar.

Die Identität ID 2 eines Objektes 100 wird nach der Erzeugung nie mehr geändert. Insbesondere bleibt sie bestehen beim Verschieben des Objekts 100 innerhalb eines Datenbestandes und beim Einfügen des Objektes 100 in andere Bestände. Neben einer ID 2 hat jedes Objekt 100 einen (logischen) Namen 3. Der Name 3 kann im Gegensatz zur ID 2 geändert werden und muss auch nicht global eindeutig sein. Wenn jedoch Eindeutigkeit unter den Namen 2 der SubObjekte 100 in jedem Feature 20 herrscht, dann können diese zur Bildung sogenannter Pfad-Referenzen (Referenzen, die ein Objekt 100 im Bezug auf seine Umwelt referenzieren) dienen.

Es werden keine Rollen von Objekten 100 explizit spezifiziert. Die Rollen werden vielmehr implizit durch die Position eines Objekts 100 im Verhältnis zu anderen Objekten 100 dargestellt, beziehungsweise sie werden durch die Referenzen 60 von und zu anderen Objekten 100 ausgedrückt.

Durch die Verwendung dieses Darstellungsprinzips (Objekt 100, Feature 20, etc.) kann erreicht werden, dass alle damit modellierten Datenbestände gemeinsame Grundstrukturen beinhalten, mit denen ein universelles Verständnis möglich ist, sprich Applikationen auf einheitliche Weise auf die Inhalte zugreifen bzw. in den Objektgeflechten navigieren können. Ferner können beliebige, heute noch nicht bekannte Abbildungsanforderungen erfüllt werden, die dann auch wieder in dieses grundsätzliche Verständnis der Einheitlichkeit einfließen, und von anderen Applikationen verstanden werden. Applikationen die sich diesem einheitlichen Format zukünftig anpassen, genießen dann automatisch auch die Kompatibilität mit allen vorherigen.

Der Datenaustausch zwischen verschiedenen Software-Applikationen wird vereinfacht durch die Strukturierung, Speicherung und Verarbeitung gemäß dem Objektmodell 10, wobei das Objektmodell 10 mindestens ein erstes Element aufweist, welches einem Typ Objekt 100 entspricht, wobei der Typ Objekt 100 folgende Merkmale aufweist:

- eine eindeutige Bezeichnung 2 der Identität des Objekts 100 zur absoluten Referenzierung des Objekts 100,
- einen logischen Namen 3 zur Benennung des Objekts 100 und
- mindestens eine Verknüpfung 6 mit einem zweiten Element, welches einem Typ Feature 20 entspricht, wobei der Typ Feature 20 folgende Merkmale aufweist:

- einen im Bezug auf das jeweilige verknüpfte Objekt 100 eindeutigen Namen 21 und

die Möglichkeit der Verknüpfung mit weiteren Elementen vom Typ Objekt 100, mit weiteren Elementen vom Typ Feature

20 und mit Daten 30, 40, 50.

Die Anwendung des Objektmodells 10 wird mit einem weiteren Ausführungsbeispiels näher erläutert. Darzustellen sei ein Symbol, wie diese z. B. in der Automatisierungstechnik üblich sind. So ein Symbol enthält neben seinem Namen noch einen Typ, eine Richtung und einen Wert. Das zu zeigende Beispiel-Symbol sei dieses:

S7_AO_Niveau   E0.3

Wobei "S7_AO_Niveau" der Name des Symbols ist. Typ und Richtung sind zusammen mit dem Wert in der Bezeichnung E0.3 in der Weise verschlüsselt, das "E" die (deutschsprachige) Richtungsbezeichnung für "Eingang" bedeutet, und in der Punkt-Darstellung sich die Adressierung eines Bits innerhalb eines Wortes ausdrückt. Das Beispiel-Symbol würde gemäß dem obigen Objektmodell 10 wie folgt dargestellt werden, und auch validierbar sein, wenn man das oben gezeigte allgemeine Schema noch mit den anschließend gezeigten symbol-spezifischen Verfeinerungen versieht. Eine Instanz des Beispiel-Symbols "S7_AO_Niveau" ist als XML-Schema folgendermaßen definiert:

```
<base:Symbol ID="{5ED19706-3840-4da0-ADD2-
    27491C0A58BB}"Name="S7_AO_Niveau">
    <base:AddressFeature>
      <base:SymbolAddress Direction="In" AddressType="Bit" Value="3.0" />
    </base:AddressFeature>
</base:Symbol>
```

Im Folgenden werden die genannten symbol-spezifischen Verfeinerungen beschrieben, mit deren Hilfe ein so beschriebenes Symbol validierbar wird. Als Erstes ist vom allgemeinen Typ "Objekt" ein symbol-spezifischer Objekttyp (hier genannt "SymbolT") abzuleiten. Dieser enthält wie oben erklärt auch ein Feature (da er ja abgeleitet ist), nämlich wiederum ein symbol-spezifisches Feature. Es sei "SymbolAdressFeatureT" genannt.

```
<xsd:element name="Symbol" type="SymbolT"
    substitutionGroup="diax:Object"/>


<xsd:complexType name="SymbolT">
    <xsd:complexContent>
        <xsd:extension base="diax:ObjectT">
            <xsd:sequence>
                <xsd:element name="AddressFeature"
    type="SymbolAddressFeatureT"/>
            </xsd:sequence>
        </xsd:extension>
    </xsd:complexContent>
</xsd:complexType>
```

Dieses symbol-spezifische Feature (genannt "SymbolAddressFeatureT" - wobei "T" für Typ steht) enthält gemäß obigem Basis-Objekt einen Parameter, nämlich wiederum einen symbol-spezifischen, der "SymbolAddressT" heißt:

**Feature SymbolAddressFeatureT**

```
<xsd:complexType name="SymbolAddressFeatureT">
    <xsd:complexContent>
        <xsd:extension base="diax:FeatureT">
            <xsd:sequence>
                <xsd:element name="SymbolAddress"
type="SymbolAddressT"/>
            </xsd:sequence>
        </xsd:extension>
    </xsd:complexContent>
</xsd:complexType>
```

Dieser symbol-spezifische Parameter "SymbolAddressT" wird im Folgenden definiert. Er enthält die restlichen Informationen: Datentyp, Richtung, Wert.

Parameter SymbolAddressT

```
<xsd:complexType name="SymbolAddressT">
    <xsd:complexContent>
      <xsd:extension base="diax:ParameterT">
            <xsd:attribute name="AddressType" type="AddressTypeEnumT"
use="required"/>
            <xsd:attribute name="Direction" type="DirectionEnumT"
use="required"/>
            <xsd:attribute name="Value" type="xsd:string"
use="required"/>
      </xsd:extension>
    </xsd:complexContent>
</xsd:complexType>
```

Mit weiteren Spezifikationen sind die im Adress-Parameter verwendeten Attribute 'Typ' und 'Richtung' definiert. Der "Wert" ist letztlich nur ein xsd:string ohne Einschränkungen. Damit genügt das obige Beispiel-Symbol dem generischen Grund-Objektmodell 10 und ist voll validierbar festgelegt.

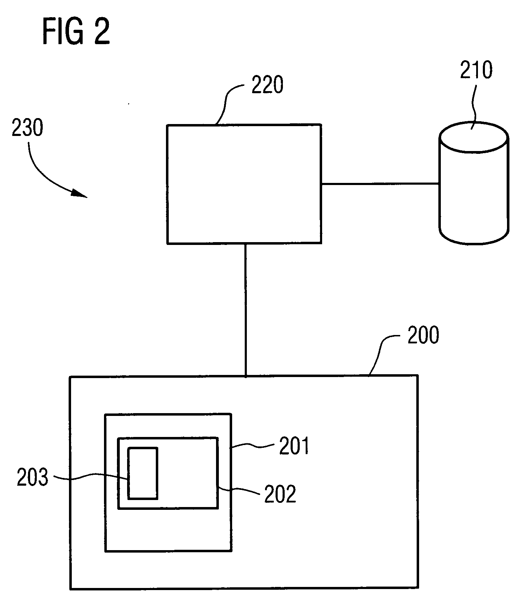

Üblicherweise sind Datenbestände 210, wie sie im Engineering 220 von Automatisierungssystemen 230 vorkommen, als umfangreiche, komplexe hierarchische Strukturen beschaffen. Um deren strukturellen Inhalt einheitlich, und transparent für andere zu machen, kann ein einfaches erfindungsgemäßes Objektmodell 10 als zentrales, generisches Grundelement der Darstellung definiert werden. Das sei im Folgenden am Beispiel eines Hardware-Projekts 200 mit seinem strukturellen Aufbau demonstriert (siehe FIG 2). Das mit "Projekt" 200 benannte hierarchische Gefüge beinhalte eine Verarbeitungsstation 201, welche als "S7 300" bezeichnet wird. Diese enthalte auf einem "Rack UR" 202 eine "CPU 315" 203, die unter vielem anderen in ihrem Symbol-Container das Symbol "S7_AO_Niveau" enthält.

Zur validierbaren Darstellung dieser Strukturen sind natürlich wiederum spezifische Verfeinerungen der Standard Schemas notwendig (zum Beispiel das StructuralFeature, das den Aufbau eines Objektes beschreibt), auf deren Darstellung hier jedoch verzichtet wird. Hier sei der Hinweis genug, dass derer beliebig viele durch entsprechende Ableitung erstellt werden können, wodurch alle dargestellten Daten dann auch systematisch validierbar sind.

```
<base:Project ID="{3E397603-9E8C-46EC-8B41-10A60FAA3B17}" Name="Project">
 <base:StructuralFeature>
  <base:Device ID="{EEAD7EA6-2F73-46D8-BCF2-2DAC712CF813}" Name="S7300">
    <base:StructuralFeature>
     <base:Device ID="{E378890F-DEA9-41EF-8C35-6EEF76FD748B}" Name="UR">
      <base:StructuralFeature>
       <base:Device ID="{85852272-12E2-4D4...}" Name="CPU315">
         <base:SoftwareFeature>
          <base:Symbol ID="{85F306C6-412…}" Name="S7_AO_Niveau">
            <base:AddressFeature>
              <base:SymbolAddress Direction="In" AddressType="Bit"
Value="0.3"/>
            </base:AddressFeature>
          </base:Symbol>
```

Zusammenfassend betrifft die Erfindung somit ein System sowie ein Verfahren zur Strukturierung, Speicherung und Verarbeitung von Daten. Zur Vereinfachung der Erweiterung von Datensätzen um zusätzliche Daten wird ein generisches Objektmodell 10 vorgeschlagen, wobei das Objektmodell 10 mindestens ein erstes Element aufweist, welches einem Typ Objekt 100 entspricht, wobei der Typ Objekt 100 mindestens eine Verknüpfung 6 mit einem Containerelement aufweist, wobei das Containerelement global definiert ist und für die Aufnahme von dritten Elementen vom Typ Feature 20 vorgesehen ist, wobei der Typ Feature 20 einen global eindeutigen Namen 21 und die Möglichkeit der Verknüpfung mit weiteren Elementen vom Typ Objekt 100, mit weiteren Elementen vom Typ Feature 20 und mit Daten 30, 40, 50 aufweist.

**Patentansprüche**

1. System zur Strukturierung, Speicherung und Verarbeitung von Daten mit einem generischen Objektmodell (10), wobei das Objektmodell (10) mindestens ein erstes Element aufweist, welches einem Typ Objekt (100) entspricht, wobei der Typ Objekt (100) mindestens eine Verknüpfung (6) mit einem Containerelement aufweist, wobei das Containerelement global definiert ist und für die Aufnahme von dritten Elementen vom Typ Feature (20) vorgesehen ist, wobei der Typ Feature (20) folgende Merkmale aufweist:

   - einen global eindeutigen Namen (21) und
   - die Möglichkeit der Verknüpfung mit weiteren Elementen vom Typ Objekt (100), mit weiteren Elementen vom Typ Feature (20) und mit Daten (30, 40, 50).

2. System nach Anspruch 1,
   **dadurch gekennzeichnet,**
   **dass** das Objektmodell (100) mit einer erweiterbaren Auszeichnungssprache beschrieben ist.

3. Verfahren zur Strukturierung, Speicherung und Verarbeitung von Daten mit einem generischen Objektmodell (10), wobei das Objektmodell (10) mindestens ein erstes Element aufweist, welches einem Typ Objekt (100) entspricht, wobei der Typ Objekt (100) mindestens mit einem Containerelement verknüpft ist, wobei das Containerelement global definiert ist und dritte Elemente vom Typ Feature (20) aufnehmen kann, wobei der Typ Feature (20) folgende Merkmale aufweist:

- einen global eindeutigen Namen (21) und
- die Möglichkeit der Verknüpfung mit weiteren Elementen vom Typ Objekt (100), mit weiteren Elementen vom Typ Feature (20) und mit Daten (30, 40, 50).

4. Verfahren nach Anspruch 3,
   **dadurch gekennzeichnet,**
   **dass** das Objektmodell (100) mit einer erweiterbaren Auszeichnungssprache beschrieben ist.

5. Verwendung eines Systems bzw. eines Verfahrens nach einem der vorhergehenden Ansprüche zum Engineering (220) eines Automatisierungssystems (230).

FIG 1

FIG 2